# EUROPEAN PATENT APPLICATION

(11) **EP 1 363 421 A2**
(43) Date of publication of application: **19.11.2003**
(21) Application number: 03291136.4
(22) Date of filing: 15.05.2003
(51) Int. Cl.: H04K 3/00

(54) **Method and apparatus for detecting a radio wave jammer**

(30) Priority: 17.05.2002 CA 2386709
(71) Applicant: Boomerang Tracking Inc., Montréal, Quebec H4N 3C5 (CA)
(72) Inventor: Boulay, André Eric, Kirkland, Québec H9H 3H9 (CA); Nelson, Robert, Hampstead, Québec H3X 3K9 (CA)
(74) Representative: Cabinet HERRBURGER

(57) **Abstract**

The present invention is a system and method for detecting a jamming signal. The signal is detected by analyzing a spectrum of PCS, wireless network and pager wavebands (or, in other words, any wireless network) and by looking for unusual patterns. If unusual patterns are found, it is considered that a jammer is present. In a preferred embodiment of the invention, the system can be aboard a recovery vehicle, or be an integral part of an on-board unit on a vehicle.

## Description

### Field of the invention

The present invention relates to a method and apparatus for detecting a radio wave jammer. The present invention finds particular application with stolen vehicle location detection systems, as well as in security applications.

### Description of the prior art

Systems for locating stolen vehicles are become more and more prevalent as the frequency of theft increases, and as the value of the vehicles increases. Such systems function in a variety of manners, but essentially consist of a mechanism for indicating that the vehicle has been stolen which is usually located on board the vehicle. Once theft of a vehicle has been established or determined, the on-board unit sends a message to a central location containing information about the location of the vehicle. This information may be periodically updated. A recovery vehicle is then dispatched to the general location of the vehicle and using a signal emitted by the on-board unit or by locking in on a communication frequency of the on-board unit, attempts to pinpoint the exact location of the vehicle for recovery, or if the unit does not emit a signal, by other positioning means. Such systems have been described in US patent no. 5,895,436 (Savoie et al.), and improvements thereto have been disclosed in WO 01/59472, both owned by the assignee of the instant application, and both herein incorporated by reference.

However, if the signal emitted by the on-board unit is being jammed, then the signal containing location information cannot be received by the central location.

### Summary of the invention

It is an object of the present invention to provide a system and method for detecting a jamming signal. The signal is detected by analyzing a spectrum of PCS, wireless network and pager wavebands (or, in other words, any wireless network) and by looking for unusual patterns. If unusual patterns are found, it is considered that a jammer is present. In a preferred embodiment of the invention, the system can be aboard a recovery vehicle, or be an integral part of an on-board unit on a vehicle.

### Brief description of the drawings

The present invention and its advantages will be more easily understood after reading the following non-restrictive description of preferred embodiments thereof, made with reference to the following drawings in which:
Figure 1 is a schematic representation of the components of the system of the present invention according to a preferred embodiment thereof;

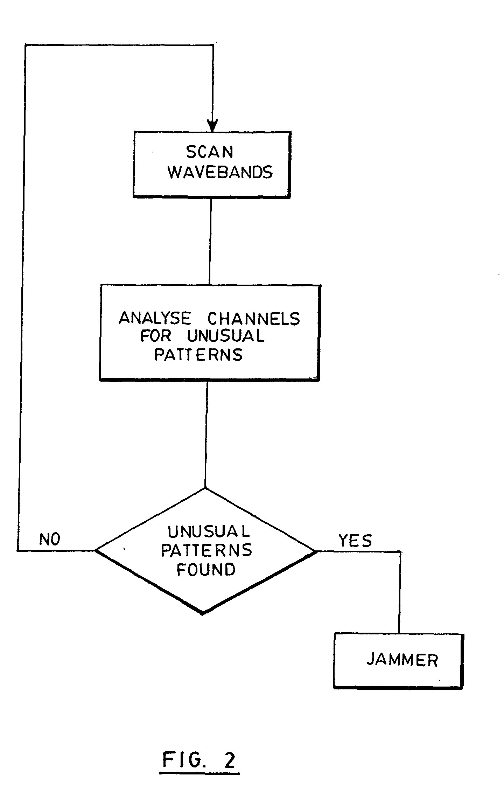

Figure 2 is a block diagram of a system according to a preferred embodiment of the invention integrated with an on-board unit (OBU) on a vehicle.

### Description of a preferred embodiment of the invention

A wireless network jammer is a device which interferes with wireless network communications channels. The jammer transmits an RF signal over one or more wavelength bands, which are used for wireless network communications, PCS and pagers. These wavelength bands vary between 800-950 MHz and 1.7-1.9 GHz. The jammer sweep can vary between 50-200 MHz and 1-2 GHz, at a frequency between 1 KHz and 20 KHz, as a sine wave, or background noise having a large frequency or amplitude component. The power of a jamming signal can vary between 5 mW and 100 mW. In some cases, the jamming signal will be intelligent, in that the jamming attempts to trick the transceiver by emitting, in the frequency bands, data which appears to be genuine, or alternatively, the signal will be a carrier wave, but with no data upon it.

It should be noted also that in some jurisdictions, such as Canada, such jammers are illegal.

The system and method of the present invention uses these profiles of a jamming signal to analyze a spectrum of wavelengths in the PCS, wireless network and pager wavebands to determine if a jammer is present. If a jammer is detected, corrective action can be taken, such as alerting the appropriate authorities to obtain a search warrant. It is presumed in the context of the present invention that since jammers are illegal in some jurisdictions, the presence of a fixed jammer indicates illicit activities, and most probably is indicative of a "chop shop".

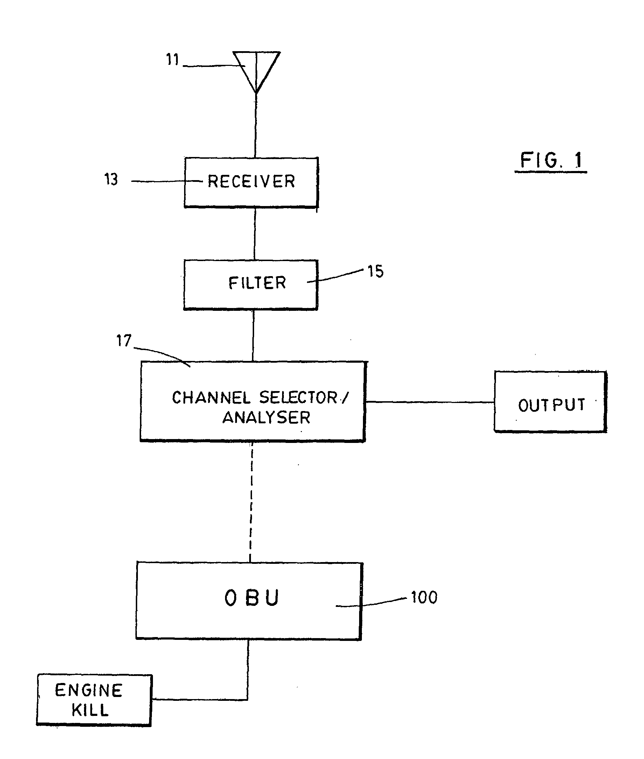

Referring now to Fig. 1, there is shown the various components of the system 10 of the present invention. The system includes an antenna 11 connected to a receiver 13. The receiver is connected to a filter 15, which essentially filters out all frequencies except the one under investigation, i.e. the wireless network communications frequencies.

The output of the filter 15 is inputted into a channel selector/analyser 17. This component will analyse the various channels and attempt to determine if a jammer is present.

In a first preferred embodiment of the invention, the system and method of the present invention will analyze channels, as stated previously, and measure an RSSI level. If the level is higher than expected for a few of the channels, a jammer is presumed.

More specifically, the analyser measures a signal strength for each channel of each waveband. This signal strength is stored in a memory. The signal strength is compared with a reference level stored in memory. For example, the reference level can be set at, say 5 mW. If the power level is above the reference level for at least two channels, which may or may not be contiguous, then the decision unit assumes that a jammer is present.

In a second preferred embodiment of the invention, the system is calibrated in a given geographic area with the "normal" levels of noise present. Then, as before, the channels are scanned. In a preferred embodiment of the invention, for cellular communications, the channels in the frequency range of 824-896 Mhz are scanned. If in 24 channels out of 30, the noise level is greater than expected, then a jammer is assumed. It will be apparent to a person skilled in the art that the frequency range and number of channels scanned for analysis purposes can be different, all the while falling within the scope of the present invention.

In an advantageous embodiment of the invention, the system can further measure the RSSI levels of these channels. Based upon the signal strength, a distance to the jammer may be deduced.

Preferably, the system is located on board a recovery vehicle. Since such vehicles are constantly moving, either attempting to recover a stolen vehicle or simply scouring the streets, they are particularly well adapted to always be on the look-out for jammers. When a jammer is located, an audible or visual alarm is raised, enabling an operator to alert the proper authorities with the general location of the jammer. In some jurisdictions, this information can lead to the issuance of a search warrant, enabling the proper authorities to investigate.

In a third preferred embodiment of the invention, the analyser 17 analyses multiple frequencies and looks at the RSSI level. If there is a lot of noise or data on these frequencies, a normal transponder would lock in to these frequencies. However, the system of the present invention makes use of the fact that a number of channels, say 10, have similar RSSI levels. If such is the case, the analyser assumes that a jammer is present. Then, if the analyser detects a channel whose RSSI level is different from the others, it will attempt to lock in on it in order to communicate with a central station. In a preferred embodiment of the invention, this third embodiment is located on the vehicle itself, and the system is operatively connected to the on-board unit 100. Thus, if a channel with a different RSSI level is detected, the analyser will send a signal to the OBU to attempt communication with the different channel. The OBU will also send a signal indicating that it is being jammed.

In a third preferred embodiment of the invention, the system of the present invention is integrated into an on-board unit on a vehicle. The system constantly, or periodically, or sporadically, analyzes the wavebands while the vehicle is in motion (whether stolen or not). If the system detects or concludes that a jammer is present, the on-board unit, if it is in communication with a central station, sends a signal to the central station indicating an occurrence of a jammer, and providing the general location of the jammer. This embodiment is particularly useful for example for detecting warehouses or other locations where jamming equipment is present, perhaps indicating the location of a chop shop.

An on-board unit of a vehicle would then, when being in proximity to the jammer, detect the jammer. Once the vehicle has moved out of the jamming range, the central location would be advised of the location of the jammer equipment.

Alternatively, since the cost of installing a scanner in each vehicle may be prohibitive, and may compromise the integrity of the on-board unit, the on-board unit may conclude to the presence of a jammer if it has been unable to communicate with the central station for a predetermined period of time.

Advantageously, the on-board unit, if it determines that a jammer is present through either one of the methods described herein, may include an engine kill, so that it is impossible to drive the vehicle once the engine kill has been activated. Engine kills are well known in the art, and no specific description thereof will be made herein.

Although the present invention has been explained hereinabove by way of a preferred embodiment thereof, it should be pointed out that any modifications to this preferred embodiment within the scope of the appended claims is not deemed to alter or change the nature and scope of the present invention.

## Claims

1. A system for detecting the presence of a jammer in an area, said system comprising:
a receiver connected to an antenna for receiving radio waves;
a filter for filtering out frequencies and passing only frequencies of interest;
a channel selector and analyser for hopping between channels in said frequencies of interest and for analysing signals in said frequencies of interest, said analyser being adapted to recognize unusual patterns in at least one channel in said frequencies of interest and for producing an output when an unusual pattern has been recognized.

2. A system according to claim 1, wherein said system is placed on board a recovery vehicle.

3. A system according to claim 1, wherein said system is placed on a vehicle having an on-board unit.

4. A method for detecting the presence of a jammer, comprising the steps of:
(a) scanning wavebands and channels in the PCS, wireless network or pager wavebands, or a combination thereof;
(b) analysing a plurality of channels in said wavebands for unusual patterns; and
(c) concluding to the presence of a jammer if unusual patterns are located.

5. In an on-board unit for a vehicle, said on-board unit being adapted to detect a stolen vehicle condition or to receive an indication that the vehicle has been stolen, and adapted to communicate with a central location, a method for determining the presence of a jammer comprising the step of calculating an amount of time during which said on-board unit has been unable to communicate with said central location, and concluding to the presence of a jammer when said period of time exceeds a predetermined period of time.

6. A method according to claim 5, wherein said on-board unit further includes an engine kill, and wherein said method includes the step of activating said engine kill when the presence of a jammer has been detected.
